# EUROPEAN PATENT APPLICATION

(11) **EP 3 613 633 A1**
(43) Date of publication of application: **26.02.2020**
(21) Application number: 19192381.2
(22) Date of filing: 19.08.2019
(51) Int. Cl.: B60N 2/90, B60N 2/879, B60N 2/809, B60N 2/02

(54) **MASSAGING VEHICLE HEADREST**

(30) Priority: 20.08.2018 US 201862719914 P
(71) Applicant: Windsor Machine and Stamping 2009 Ltd, Windsor, Ontario N9H 2N2 (CA)
(72) Inventor: Hunt, David James, Windsor, Ontario N9A 2N2 (CA)
(74) Representative: Manitz Finsterwald Patent- und Rechtsanwaltspartnerschaft mbB

(57) **Abstract**

A vehicle headrest assembly (10) including a massaging mechanism (16) that has at least one moving component and multiple settings. The massaging component further includes a heating element for providing therapeutic heating or cooling. Several headrest assemblies may be incorporated into a rideshare vehicle or public transport vehicle. The massaging settings are selected by an occupant or driver and include adjustments in temperature and speed at which the moving component progresses. The massaging mechanism further includes a microprocessor (42) configured to implement a safety check and limit certain functions if the request is associated with a headrest assembly on a driver's seat while the vehicle is being driven.

## Description

### CROSS-REFERENCE TO RELATED APPLICATION

This U.S. Patent Application claims the benefit of and priority to U.S. Provisional Patent Application Serial No. 62/719,914, filed on August 20, 2018, titled "Massaging Vehicle Headrest," the entire disclosure of which is hereby incorporated by reference.

### BACKGROUND OF THE INVENTION

### 1. Field of the Invention

The present invention relates to vehicle headrests and, more particularly, to a headrest with massaging features incorporated therewith.

### 2. Related Art

This section provides background information related to the present disclosure which is not necessarily prior art.

Technological improvements of vehicles have generally been focused on enhancements to features including efficiency, safety, and comfort. In a race to improve these features, matters of technological conveniences are often overlooked. These technological conveniences not only make an occupant's travel experience more enjoyable, they tangentially result in improvements to efficiency, safety, and comfort. More specifically, a more enjoyable travel experience results in longer periods of driving between stops and can also encourage less movement of occupants during travel.

One example feature of a vehicle that has historically been employed only for safety and comfort is a headrest. Most vehicles include headrests atop an occupant's seat and in a position adjacent the occupant's head. Headrests are typically cushioned for comfort and most are commonly finished in the same material as the rest of the seat. For the most part, a headrest is not shared among occupants and can be adjusted in one or more positions for a specific body size and comfort preference. Because accommodating user preferences have historically been limited to adjusting the position of the headrest, there is a continuing desire to provide additional functionality to the headrest and provide an occupant more options to improve and personalize their travel experience.

### SUMMARY OF THE INVENTION

This section provides a general summary of the disclosure and is not to be interpreted as a complete and comprehensive listing of all of the objects, aspects, features and advantages associated with the present disclosure.

In accordance with one aspect, the present invention provides a vehicle headrest assembly for a vehicle. The headrest assembly comprises a housing operatively coupleable to a vehicle seatback, a cover at least partially surrounding the housing, and a massaging mechanism that includes a moving component that is at least partially located within at least one of the housing and the cover.

In accordance with another aspect, the present invention provides a method of controlling a massaging mechanism disposed in a vehicle having a driver's seat including a headrest assembly with the massaging mechanism and a microprocessor controlling various functions of the massaging mechanism. The microprocessor is configured to perform the steps of obtaining a request to turn on a massaging function, determining if the vehicle is moving, and limiting at least one massaging function if vehicle is moving.

In accordance with yet another aspect of the disclosure, the present invention provides a vehicle including a plurality of seats that each include a headrest assembly. Each of the headrest assemblies comprise a housing operatively coupleable to a vehicle seatback, a cover at least partially surrounding the housing, and a massaging mechanism that includes at least one moving component that is at least partially located within at least one of the housing and the cover.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
Figure 1 is a perspective view of a headrest assembly having a massaging mechanism;
Figure 2 is a perspective view of the headrest assembly illustrating the massaging mechanism and associated components in accordance with another aspect of the disclosure;
Figure 3 is a perspective view of the headrest assembly in a public transport vehicle in accordance with yet another aspect of the disclosure;
Figure 4 is a schematic view of a massaging mechanism circuit used in conjunction with the headrest assembly; and
Figure 5 is a method flow chart including steps in accordance with the application of the headrest assembly.

### DESCRIPTION OF THE ENABLING EMBODIMENTS

Example embodiments will now be described more fully with reference to the accompanying drawings. In general, the subject embodiments are directed to a headrest assembly for a vehicle that includes a massaging feature. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, wherein like numerals indicate corresponding parts throughout the views, the headrest assembly is intended for providing an enhanced travel experience to occupants of a vehicle via incorporation of massaging functionality into the headrest assembly.

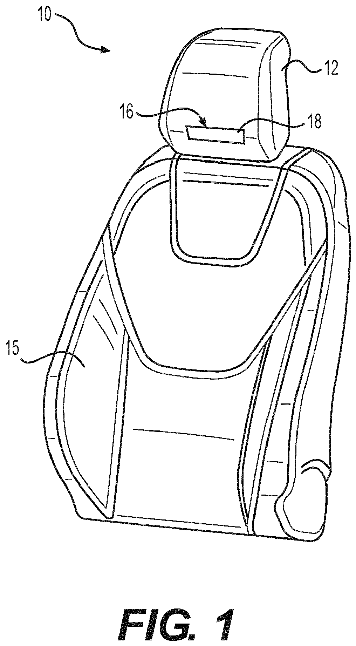

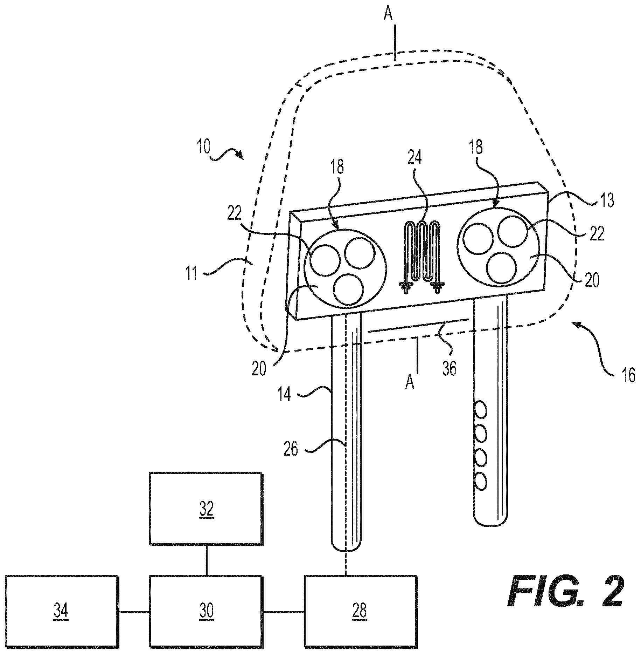

With initial reference to Figure 1, a headrest assembly is depicted. The headrest assembly is generally referred to with numeral 10. The headrest assembly 10 includes a housing 11 (Figure 2) that at least partially encloses several components associated with stabilization and/or adjustment of the headrest assembly. A cushion and a cover 12 are provided over the housing for aesthetic purposes and occupant comfort. A base portion 14 (which may also be referred to as an "armature") is mountable to a vehicle seat 15 and, more specifically, to the upper portion of the seatback of the vehicle seat 15.

The embodiments of the headrest assembly 10 disclosed herein include at least one massaging mechanism 16. The massaging mechanism 16 may be disposed within the cover 12. The massaging mechanism 16 includes one or more massaging/moving components 18 that are moveable and may be rollers, pulsating components, heating and cooling elements, or any other known component that is utilized for providing a massaging action. The massaging component(s) 18 has a surface that provides the massaging action to a seated occupant's neck, shoulders, and/or head during operation. The massaging action may be movement in a vertical direction, a horizontal direction, a cross-car direction, or a combination thereof. Additionally, the massaging action may include a combination of heating or cooling and movement actions.

As shown in the embodiment presented in Figure 1, the active surface of the massaging component(s) 18 is immediately adjacent the inner surface of the cover 12. In other embodiments, the active surface is at least partially within the cushion of the headrest assembly 10, such that a portion of the cushion is disposed between the massaging component 18 and the cover 12.

As will be described in greater detail below, the massaging component(s) 18 is actuated by an electromechanical device located within the cover 12 of the headrest assembly 10. The electromechanical device may be activated and controlled by a seated vehicle occupant with any suitable input device, including physical controls that are part of the vehicle or with a mobile device. The particular types of massaging actions available may depend on an operating condition of the vehicle. For example, in a manual driving mode, certain massaging actions may be available to the seated occupant, while more massaging options may be available during an autonomous driving mode of the vehicle.

Figure 2 illustrates the headrest assembly 10 in accordance with one embodiment. The cover 12 has been removed to illustrate the housing 11 and the internally disposed massaging mechanism 16 and components 18. The components 18 of the massaging mechanism 16 includes a pair of rotating discs 20 each having kneading elements 22, each disc 20 is located symmetrically with respect to a vertical centerline "A" of the headrest assembly 10. In addition or alternatively to rotating with the disc 20, the kneading elements 22 may also vibrate. A heating element 24 is located between each of the discs 20 that allows for therapeutic temperature adjustment. The heating element 24 may heat and/or cool. Although the massaging mechanism 16 illustrated and described above includes a pair of rotating discs 20, it is to be appreciated that a single rotating disc 20 with one or more kneading elements 22 is contemplated in some embodiments, as is more than a pair of rotating discs 20 in other embodiments.

The massaging mechanism 16 and associated components may be at least partially embedded within a protective envelope 13. The envelope 13 can be constructed of hard plastic, a semi-flexible material that allows some deformability, or a flexible material such as rubber. The envelope 13 can be directly connected to the armature 14 and may also be water resistant. A power cable 26 may extend from the envelope 13, through the armature 14, to a power source 28. It should be appreciated, however, that the power source 28 may alternatively be located within cover 12 and/or housing 11. In some arrangements, the power source 28 is a battery and, more specifically, a rechargeable battery that is connected to and charged by a vehicular electrical system 30. The vehicular electrical system 30, may include one or more of a vehicle alternator 32 or a power generation system 34 such as a regenerative braking. In order to assist in the maintenance of the massaging mechanism 16 and associated components, an access opening 36 may be provided within the cover 12 to provide access.

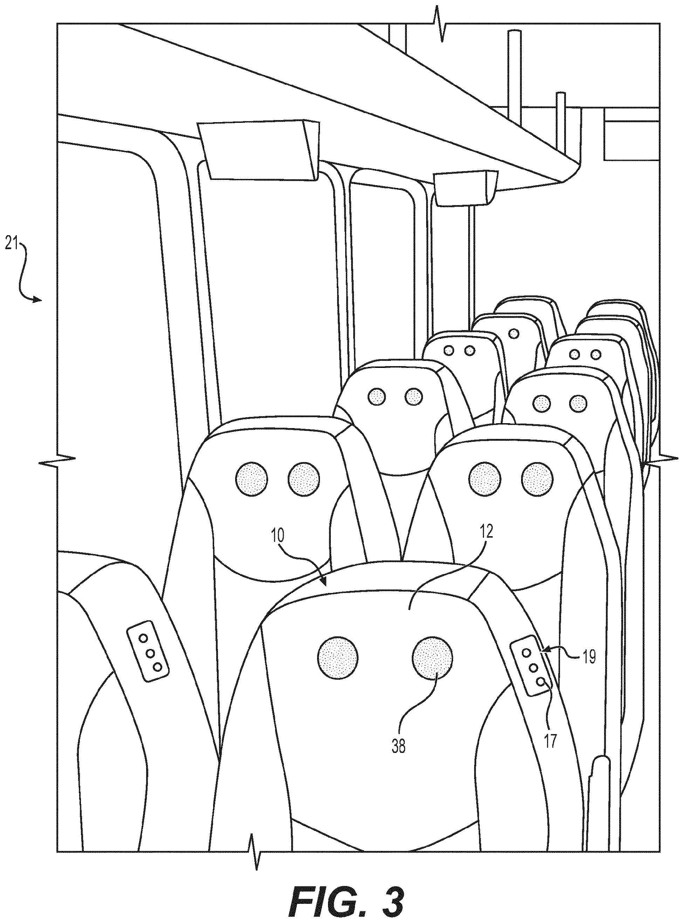

Another embodiment is shown in Figure 3, wherein the massaging mechanism 16 is recessed into the cushion and covered with a sheath 36 with a material that can be repeatedly stretched such that it can allow the transmission of kneading movement without breaking down over time. For example, a stretchable nylon material may be employed in some embodiments. As such, the sheath 36 may be a different material than the cover 12, for example, the cover 12 may be leather and the sheath 36 may be stretchable nylon. The sheath 36 may also include material that is water resistant such as a fabric laminated or coated in rubber, polyurethane, silicone elastomer, etc. The sheath 36 may be part of, i.e., integral with the cover 12, or a separate piece. If integral, the portion of the cover comprising the sheath 36 is superimposed over at least the components 18. Figure 3 illustrates one example application of the headrest assembly 10 in a public transport vehicle 21. Turning on, pairing to, and other additional controls of the massaging mechanism 16 may be controlled via a user interface 19 that includes a plurality of buttons 17. For example, the buttons 17 can include an on/off button, a pairing button, and various setting buttons such as temperature adjustment and kneading speed. For example, the kneading speed may include slow, moderate, and fast. The user interface 19 may further include an LED to indicate the status of the massaging mechanism 16, e.g., whether or not it is turned on or if it has successfully been paired to a mobile device.

In addition to application in a public transport vehicle 21, the headrest assembly 10 can also be incorporated into ride sharing vehicles, transportation network company vehicles, and vehicles for personal use. The user interface 19 may be located in any convenient location within the vehicle (which may vary depending on which type of above-described vehicle the massaging mechanism 16 is utilized within. Such locations include on a seat or headrest, as illustrated, a touch screen or a steering wheel, for example. Furthermore, the user interface may be associated with a vehicle voice activated system or controlled via a paired mobile device.

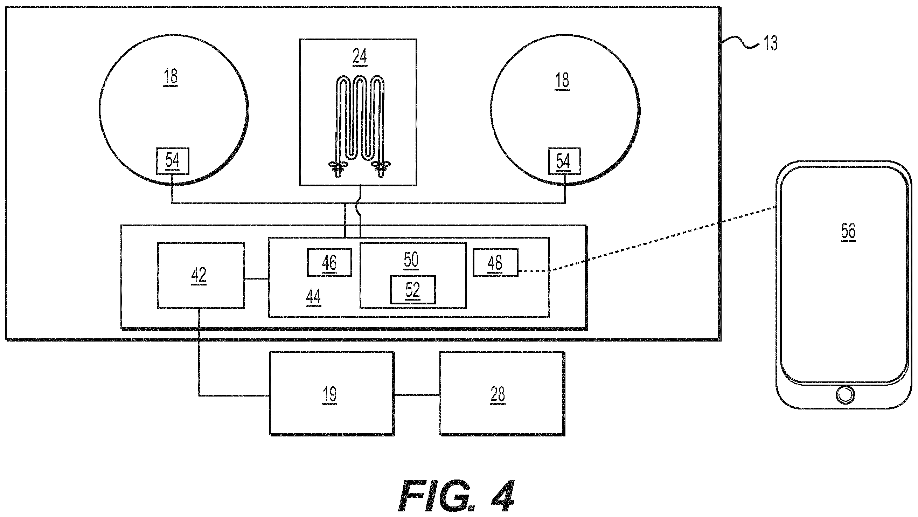

Figure 4 is a schematic view of the massaging mechanism 16 and an associated massaging mechanism circuit 38 contained within envelope 13. The various elements provided therein allow for a specific implementation. Thus, one of ordinary skill in the art of electronics and circuits may substitute various components to achieve a similar functionality. The massaging mechanism circuit 38 may include a primary printed circuit board (PCB) 40. The primary PCB 40 controls certain features of the massaging mechanism 16 such as regulating voltage from the power source 28, increasing or decreasing movement of the massaging components 18, changing the temperature of the heating element 24, and pairing to a mobile device. More specifically, the PCB 40 includes a voltage regulator circuit 42 that supervises the amount of power being supplied to the other components. The PCB 40 also includes a microcontroller 44 that controls certain features of the massaging mechanism 16. The microcontroller 44 includes a microprocessor 46, a communications module 48, and a memory 50 having machine readable non-transitory storage. Programs and/or software 52 are saved on the memory 50. The microprocessor 42 carries out instructions based on the software 48, for example, changing the temperature of the heating element 24 at predetermined time intervals. Software 48 may be updated via the transmission of information between the communications module 44 and one or more computing devices 56. For example, the computing device 56 may be a paired mobile device such as mobile phone, tablet, laptop or wearable technology. The user interface 19 may be directly connected to the massaging mechanism circuit 38 and use the same power source 28. Secondary circuits 54 may be located on each respective massaging component 18 for connecting the line-in and PCB 40.

It should be appreciated that while the components 18 of the massaging mechanism 16 may include a pair of rotating discs 20 each having kneading elements 22, these features are provided as one example massaging device. The headrest assembly 10 may incorporate other massaging devices as alternatives to the rotating discs 20 or as supplements to the rotating discs 20. For a non-limiting example, components 18 of the massaging mechanism 16 may include a rotating element such as roller wheels movable along a track, or the above noted rotating discs 20. The massaging mechanism 16 may further include inflatable bags, and/or vibrating projections (such as the vibrating kneading elements 22). Moreover, the components 18 may be located at various locations in the headrest, such that they are aligned with acupressure points around the shoulders, neck, and head of an occupant. Because the headrest assembly 10 can be vertically adjusted via armature 14, the location of the components 18 can be optimized for various sized occupants.

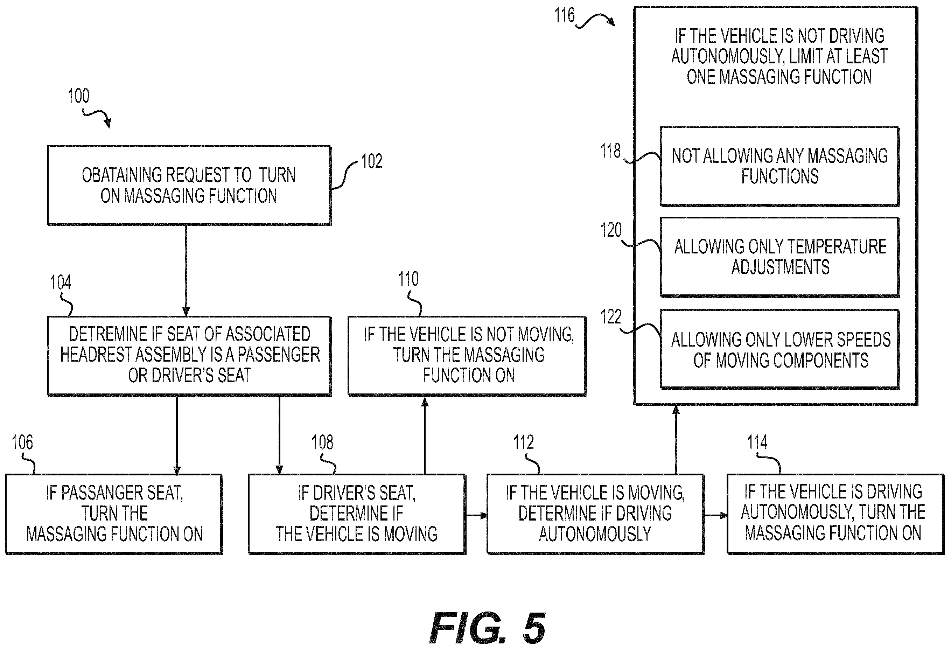

Figure 5 illustrates a software implemented method 100 that includes steps associated with an autonomous capable vehicle having at least one passenger seat and a driver's seat, with each seat including a headrest assembly. The method 100 may be implemented by the above-described microprocessor and includes obtaining a request for turning on a massaging 102 function via a local user interface or paired mobile device. The method 100 continues by determining 104 if the seat with the associated headrest assembly is a passenger or a driver's seat. If the seat is a passenger seat, the method continues by turning the massaging function on 106. If the seat is a driver's seat, the method continues by determining 108 if the vehicle is moving and/or in drive. If the vehicle is not moving, the method continues by turning the massaging function on 110. If the vehicle is moving, the method continues by determining 112 if the vehicle is driving autonomously. If the vehicle is driving autonomously, the method continues by turning the massaging function on 114. If the vehicle is not driving autonomously, the method continues by limiting 116 at least one feature of the massaging function to the driver. The step of limiting 116 at least one feature may include not allowing any massaging features 118 (e.g., not allowing the massaging mechanism to turn on), allowing only temperature adjustments 120, and/or allowing only lower speeds of moving components 122.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A vehicle headrest assembly for a vehicle comprising:
a housing operatively coupleable to a vehicle seatback;
a cover at least partially surrounding the housing; and
a massaging mechanism including a moving component that is at least partially located within at least one of the housing and the cover.

2. The vehicle headrest assembly of Claim 1, wherein the moving component includes a rotating element.

3. The vehicle headrest assembly of Claim 2, wherein the rotating element includes a disc with kneading elements disposed thereon.

4. The vehicle headrest assembly of Claim 1, wherein the moving component includes a vibrating element.

5. The vehicle headrest assembly of Claim 1, wherein the massaging mechanism includes a heating element for providing at least one of heating or cooling.

6. The vehicle headrest assembly of Claim 1, wherein the cover includes a sheath portion superimposed over the moving component, the sheath portion comprising a material different than a material of the cover.

7. The vehicle headrest assembly of Claim 1, further comprising an armature operatively coupling the housing to the vehicle seatback and permitting the housing to move vertically with respect to the vehicle seatback.

8. The vehicle headrest assembly of Claim 1, further comprising a massaging mechanism circuit including a microcontroller and a microprocessor.

9. The vehicle headrest assembly of Claim 8, wherein the microprocessor is configured to receive instructions from a remote computing device to change at least one setting of the massaging mechanism.

10. The vehicle headrest assembly of Claim 9, wherein the at least one setting includes turning the massaging mechanism on and off.

11. The vehicle headrest assembly of Claim 10, wherein the at least one setting includes the speed of movement of the moving component.

12. A method of controlling a massaging mechanism disposed in a vehicle having a driver's seat including a headrest assembly with the massaging mechanism and a microprocessor controlling various functions of the massaging mechanism, the microprocessor configured to perform the steps of:
obtaining a request to turn on a massaging function;
determining if the vehicle is moving; and
limiting at least one massaging function if vehicle is moving.

13. The method of Claim 12, wherein the vehicle is operable in a manual driving mode and an autonomous driving mode, and the method further comprises determining if the vehicle is driving autonomously, wherein the at least one massaging function is limited if the vehicle is in the manual driving mode and the at least one massaging function is not limited if the vehicle is driving in the autonomous driving mode.

14. The method of Claim 12, wherein the at least one massaging function includes moving a massaging component and wherein the step of limiting the at least one massaging function prevents the massaging component from moving.

15. A vehicle including a plurality of seats that each include a headrest assembly, each of the headrest assemblies comprising:
a housing operatively coupleable to a vehicle seatback;
a cover at least partially surrounding the housing; and
a massaging mechanism including at least one moving component that is at least partially located within at least one of the housing and the cover.
